# EUROPEAN PATENT SPECIFICATION

(11) **EP 4 064 635 B1**
(45) Date of publication and mention of the grant of the patent: **13.03.2024**
(21) Application number: 21165324.1
(22) Date of filing: 26.03.2021
(51) Int. Cl.: H04L 65/1069, H04L 45/00, H04L 65/1016, H04L 65/1104, H04W 28/12, H04L 47/24, H04L 47/2408, H04L 41/12

(54) **METHOD FOR REALIZING VOICE-OVER-IP COMMUNICATION SESSIONS BETWEEN A CALLING PARTY AND A CALLED PARTY, TELECOMMUNICATIONS NETWORK, TRANSPORT FORWARDING PATH NETWORK ENTITY OR PROXY CALL STATE CONTROL FUNCTION ENTITY OR FUNCTIONALITY OR SOFTWARE DEFINED NETWORK ENTITY OR FUNCTIONALITY, PROGRAM AND COMPUTER-READABLE MEDIUM**
VERFAHREN ZUR REALISIERUNG VON VOICE-OVER-IP-KOMMUNIKATIONSSITZUNGEN ZWISCHEN EINEM ANRUFENDEN TEILNEHMER UND EINEM ANGERUFENEN TEILNEHMER, TELEKOMMUNIKATIONSNETZ, TRANSPORTLEITUNGSPFADNETZWERKENTITÄT ODER PROXYANRUFSZUSTANDSSTEUERUNGSFUNKTIONSEINHEIT ODER -FUNKTION ODER SOFTWAREDEFINIERTE NETZWERKEINHEIT ODER -FUNKTION, PROGRAMM UND COMPUTERLESBARES MEDIUM
PROCÉDÉ DE RÉALISATION DE SESSIONS DE COMMUNICATION VOIX SUR IP ENTRE UN APPELANT ET UN APPELÉ, RÉSEAU DE TÉLÉCOMMUNICATIONS, ENTITÉ DE RÉSEAU DE CHEMIN DE TRANSMISSION DE TRANSPORT OU ENTITÉ DE FONCTION OU FONCTIONNALITÉ DE CONTRÔLE DE L'ÉTAT DES APPELS PROXY OU ENTITÉ OU FONCTIONNALITÉ DE RÉSEAU DÉFINIE PAR LOGICIEL, PROGRAMME ET SUPPORT LISIBLE PAR ORDINATEUR

(43) Date of publication of application: 28.09.2022
(73) Proprietor: Deutsche Telekom AG, 53113 Bonn (DE); Uniberg GmbH, 23816 Bebensee (DE)
(72) Inventor: SCHOTT, Roland, 61231 Bad Nauheim (DE); GRIMM, Lothar, 79104 Freiburg (DE); MÖLLER, Andreas, 61462 Königstein (DE); VON KEISER, Moritz-Jesco, 65388 Schlangenbad (DE); HAAG, Thomas, 63110 Rodgau (DE); JESSKE, Roland, 69514 Laudenbach (DE)
(74) Representative: Schwöbel, Thilo K.

(56) References cited:
- US-A1- 2018 337 849

## Description

### BACKGROUND

The invention relates to a method, as further defined in claim 1, a telecommunications network, as further defined in claim 10, a P-CSCF, as further defined in claim 11, a computer program, as further defined in claim 12, a computer-readable medium, as further defined in claim 13, for for realizing Voice-over-IP communication sessions between a calling party and a called party using a telecommunications network.

It is conventionally known to realize telecommunications networks, or their architecture, such that voice-related services, especially voice-over-IP services, or, more generally, real-time services are provided by means of involving network infrastructure elements being specifically dedicated in view of such services. However, this not only leads to an increased complexity of such telecommunications network platforms but also to an increased number of hardware or compute resources within such telecommunications networks, for providing such real-time related, especially voice-related, services.

US2018337849 relates to communications methods, apparatus and systems for providing media micro flow services in a scalable manner using SDN principles. In an exemplary method embodiment a session border controller in a SDN network is operated to receive first signaling information for establishing a first media session, the first media session including a first media packet flow that passes through a first programmable switch of the SDN network; generate instructions to implement a media micro flow service on the first programmable switch through which the first media packet flow passes; and send the instructions to a SDN controller which controls the first programmable switch.

### SUMMARY

An object of the present invention is to provide a technically simple, effective and cost-effective solution for realizing Voice-over-IP communication sessions between a calling party and a called party using a telecommunications network comprising an access and/or aggregation network and an internet protocol backbone network, wherein such afore-mentioned network infrastructure (typically involving both hardware and software elements) that is specifically dedicated for providing such Voice-related services, especially Voice-over-IP services, is able to be reduced and thereby the platform of the telecommunications network simplified.

The invention is defined by the appended claims.

It is thereby advantageously possible according to the present invention to effectively and comparatively easily realize Voice-over-IP communication sessions such that the first transport forwarding path network entity is configured, by a software defined network controller entity or functionality such that the transport forwarding path network entity implements modifications regarding data packets of the first and/or second media flow on a session-by-session basis and dependent on at least a part of the content of the session description protocol offer message and the session description protocol answer message. Thereby, it is advantageously possible to realize media traffic gating over either IPv4 or IPv6 such that, controlled by the software defined network controller entity or functionality, the transport forwarding path network entity is controlled to realize opening and closing of gates (such as media pinholes) on a session-by-session basis. Additionally, it is advantageously possible to realize security for the media stream being sent to the calling party or the called party. Modifications regarding data packets of the first and/or second media flow, especially internet protocol header modifications of such data packets, advantageously allow for the realization of topology hiding (regarding IPv4 and IPv6), e.g. by modifying IP addresses figuring in the session description protocol (messages) are able to be modified (on a session-by-session basis) by the software defined network controller entity or functionality.

In conventionally known telecommunications networks, media streams are often routed through so-called access border gatewav function (aBGF) components, wherein each participant in a voice connection typically uses an associated aBGF component to transmit media streams. The aBGF component or instance realizes a topology-hiding functionality, so that the calling and called subscribers cannot directly see the IP addresses used by each other. Especially such aBGF instances are currently part of a so-called voice service area (VoSA), which is part of the infrastructure of the telecommunications network, and distributed at, typically, a certain (comparatively low) number of locations within, e.g., a national telecommunications network. Conventionally, such a distributed voice service area provides dedicated server and network infrastructure for both signaling and media plane.

According to the present invention, such voice service area infrastructure is either avoided outright (and, hence, able to be removed altogether from the platform) or it is at least circumvented as much as possible in normal or the most common use cases (and, e.g., only used for special circumstances or specific use cases). Avoiding to route media traffic via such voice service area components (especially aBGF instances or components) advantageously provides for a decrease of data transmission sections and a reduction of latency by means of shortening the transmission path of media resources (hence, resulting in improved voice quality) as well as reducing the number of required server systems (especially aBGF instances of the voice service area) and network resources (switching and routing capacity in the VoSA).
According to the present invention, no additional traffic or effort in routing traffic is generated, as, in any case, the media flow is routed (even on infrastructure platforms (or IP multimedia subsystem (IMS) platforms) comprising such voice service area components or aBGF instances or components) through the broadband access servers (or broadband access gateways) such as broadband network gateway (BNG) instances or components, or DISAGGREGATED BNG ARCHITECTURES central office points of delivery.
Furthermore according to the present invention, without using aBGF components or instances the selection decision regarding selecting an aBGF instance or component (i.e. which one of a certain number of aBGF instances or components to choose) - typically taken by the proxy call state control function (P-CSCF) - cannot only be avoided but also inefficiencies resulting from such a decision (especially in case of load balancing mechanisms such as, e.g., the application of round-robin procedures or the like, being implemented) avoided - such as, e.g., routing media traffic over much longer distances than necessary, for example, in Germany, a calling party located in the north (say, Hamburg) being assigned to an aBGF instance in the south (say, Munich), and a called party located in the south being assigned an aBGF in the north, possibly resulting in the media data stream being transmitted roughly three times between Hamburg and Munich. According to the present invention, such scenarios are reliably prevented and unnecessary communication flows avoided.

According to the present invention, by means of using technologies such as software defined network (SDN) components and/or programmable hardware features such as field programmable gate arrays (FPGA), it is advantageously possible to realize functions such as media traffic gating, security for the media stream, and topology-hiding to be mapped to the transport forwarding path network entities (or broadband access servers, broadband access gateways) in a scalable manner. According to the present invention, and in addition to media traffic gating, security for the media stream, and network topology hiding, other functions are preferably also migrated to or realized in or by mechanisms in the transport forwarding path network entities (or broadband access servers such as broadband network gateways or DISAGGREGATED BNG ARCHITECTURES central office points of delivery), such functions especially comprising one or a plurality out of: media flow security, media flow encryption, media flow interworking (SRTP-RTP, MRFP, IPv6-IPv4), lawful intercept (media), etc.

According to the present invention, by means of dispensing with the aBGF components or instances as a component in the IP multimedia subsystem, it is advantageously possible to significantly reduce costs since the corresponding traffic stays being routed through transport forwarding path network entity such as DISAGGREGATED BNG ARCHITECTURES or the BNG (or broadband access gateways); additionally, latency is reduced for media data streams which means that voice quality is improved, and, furthermore, removing components from the communication flow also improves the theoretical availability. In the context of the present invention, the term transport forwarding path network entity and the terms broadband network gateway (or BNG) or broadband access gateway are used synonymously.

According to the present invention, each Voice-over-IP communication session comprises a signaling session and a media flow session, and both the signaling session and the media flow session is routed via a first transport forwarding path network entity and a second transport forwarding path network entity, the calling party being associated or assigned to a first proxy call state control function entity or functionality and the called party being associated or assigned to a second proxy call state control function entity or functionality. The media flow session comprises a first media flow in the direction from the calling party to the called party as well as a second media flow in the direction from the called party to the calling party. According to the inventive method, in a first step, the media flow session or corresponding part of the Voice-over-IP communication session is initiated by means of transmitting or exchanging a session description protocol offer message and a session description protocol answer message between the first and second proxy call state control function entity or functionality as part of the signaling session. In a second step, after or during the first step, the first transport forwarding path network entity is configured, by a first software defined network controller entity or functionality, and involving at least one first configuration message transmitted to the first transport forwarding path network entity, such that the first transport forwarding path network entity implements modifications regarding data packets of the first and/or second media flow on a session-by-session basis and dependent on at least a part of the content of the session description protocol offer message and the session description protocol answer message.

In addition to thereby reducing infrastructure costs in terms of less hardware compute resources used (and, accordingly, in terms of corresponding power requirements, environmental effects, (software) licenses and maintenance efforts), it is also advantageously possible according to the present invention, by means of eliminating platform components and reducing platform complexity, to optimize routing decisions and bandwidth use within the internet protocol backbone network of the telecommunications network.

According to the present invention, it is advantageously possible and preferred that, during the second step, also the second transport forwarding path network entity is configured by means of using the first software defined network entity or functionality or a second software defined network entity or functionality, and involving at least one second configuration message transmitted to the second transport forwarding path network entity, such that the second transport forwarding path network entity implements modifications regarding data packets of the first and/or second media flow on a session-by-session basis and dependent on at least a part of the content of the session description protocol offer message and the session description protocol answer message.

Thereby, it is advantageously possible that also the second transport forwarding path network entity is controlled by the corresponding software defined network controller entity or functionality.

According to the present invention, it is furthermore advantageously possible and preferred that
- by means of its configuration due to the at least one first configuration message, the first transport forwarding path network entity realizes and/or
- by means of its configuration due to the at least one second configuration message, the second transport forwarding path network entity realizes
at least one out of the following:
- traffic gating over either IPv4 or IPv6
- security, especially encryption, for the media stream being sent towards the calling party and/or the called party,
- topology hiding for IPv4 and/or IPv6,
- bridging between IPv4 and IPv6 or between IPv6 and IPv4,
- optimal media path,
- type-of-service and/or quality-of-service,
- helping network address translation traversal.

According to the present invention, it is furthermore advantageously possible and preferred that the first software defined network entity or functionality, upon at least one control message received from the first proxy call state control function entity or functionality, transmits the at least one first configuration message to the first transport forwarding path network entity such that the first transport forwarding path network entity implements the respective modifications regarding data packets of the first and/or second media flow, especially modifications of the internet protocol header of these data packets, dependent on at least a part of the content of the session description protocol offer message and the session description protocol answer message,
wherein especially, regarding the first media flow, a first internet protocol source configuration is used, and, regarding the second media flow, a second internet protocol destination configuration is used,
the first internet protocol source and the second internet protocol destination configurations of the first transport forwarding path network entity being internet protocol configurations defining the first transport forwarding path network entity as endpoint of the media flow session enabling to realize topology-hiding with respect to the second transport forwarding path network entity.

Furthermore, it is advantageously possible and preferred according to the present invention that the second software defined network entity or functionality, upon at least one further control message received from the second proxy call state control function entity or functionality, transmits the at least one second configuration message to the second transport forwarding path network entity such that the second transport forwarding path network entity implements the respective modifications regarding data packets of the first and/or second media flow, especially modifications of the internet protocol header of these data packets, dependent on at least a part of the content of the session description protocol offer message and the session description protocol answer message,
wherein especially, regarding the second media flow, a second internet protocol source configuration is used, and, regarding the first media flow, a first internet protocol destination configuration is used,
the second internet protocol source and the first internet protocol destination configurations of the second transport forwarding path network entity being internet protocol configurations defining the second transport forwarding path network entity as endpoint of the media flow session enabling to realize topology-hiding with respect to the first transport forwarding path network entity.

By means of the first (or second) software defined network entity or functionality receiving at least one control message (or further control message) from the first (or second) proxy call state control function entity, it is advantageously possible to configure the behavior of the transport forwarding path network entity by means of content of the session description protocol messages and/or under the control of the respective proxy call state control function entity.
By means of using the internet protocol configurations of the first and second transport forwarding path network entities as endpoints of the media flow session, it is advantageously possible to enable topology-hiding even though additional dedicated hardware structures are omitted or circumvented. Thereby, the first internet protocol source and the second internet protocol destination configurations of the first transport forwarding path network entity are internet protocol configurations defining these internet protocol configurations as endpoints (i.e. the first transport forwarding path network entity as endpoint) of the media flow session enabling to realize topology-hiding with respect to the second transport forwarding path network entity , i.e. the internet protocol address (or the internet protocol configuration) of the calling party is hidden from the second transport forwarding path network entity (and from the called party as well).

According to the present invention, it is furthermore advantageously possible and preferred that the first transport forwarding path network entity corresponds to an entity specifically assigned to the calling party and the first software defined network entity or functionality, upon at least the one control message received from the first proxy call state control function entity or functionality, determines the first transport forwarding path network entity corresponding to the calling party and/or
wherein the second transport forwarding path network entity corresponds to an entity specifically assigned to the called party and the second software defined network entity or functionality, upon at least the one control message received from the second proxy call state control function entity or functionality, determines the second transport forwarding path network entity corresponding to the called party.

It is thereby advantageously possible that, while the corresponding transport forwarding path network entity is controlled by the corresponding software defined network controller entity or functionality (via the at least one first configuration message or the at least one second configuration message), also the corresponding proxy call state control function entity or functionality is able to influence the behavior of the transport forwarding path network entity (via the at least the one control message received from the first proxy call state control function entity or functionality or the at least the one further control message received from the second proxy call state control function entity or functionality).

According to the present invention, it is advantageously furthermore possible and preferred that the control message and/or the further control message especially relate to messages according to a media gateway control protocol, MGCP, such as the H.248 protocol, the Megaco Gateway Control Protocol, and/or
wherein the first and/or second configuration message relate to messages of a signaling protocol between the software defined network controller and the controlled network element, such as the Openflow communications protocol,
wherein especially the first and second internet protocol source and destination configurations, respectively, comprise or relate to an internet protocol address information and to an internet protocol port information.

According to the present invention, it is furthermore advantageously possible and preferred that, during the first step, the calling party transmits the session description protocol offer message according to a first version thereof, comprising, as an endpoint address information of or regarding the media flow session, the address information of the calling party, and wherein the first proxy call state control function entity or functionality transmits the session description protocol offer message according to a second version thereof, comprising, as an endpoint address information of or regarding the media flow session, the address information of the first transport forwarding path network entity, and/or
wherein, during the first step, the called party transmits the session description protocol answer message according to a first version thereof, comprising, as an endpoint address information of or regarding the media flow session, the address information of the called party, and wherein the second proxy call state control function entity or functionality transmits the session description protocol answer message according to a second version thereof, comprising, as an endpoint address information of or regarding the media flow session, the address information of the second transport forwarding path network entity.

According to the present invention, it is advantageously furthermore possible and preferred that regarding the first media flow and/or regarding the second media flow the first transport forwarding path network entity and/or the second transport forwarding path network entity realize a network address translation functionality, wherein especially regarding both the first media flow and the second media flow, solely the first transport forwarding path network entity and/or the second transport forwarding path network entity realize a network address translation functionality, wherein especially at most three different, RTP sessions, real-time transfer protocol sessions, and/or three different RTCP sessions, real-time transfer control protocol sessions, are realized, per media flow, between the calling party and the called party.

According to the present invention, the proxy call state control function (P-CSCF) informs the transport forwarding path network entity of a media routing request (either directly or indirectly through a control entity such as an software defined network controller entity or functionality). This is preferably done using a control protocol such as H.248 / MEGACO or directly using Openflow. The responsible transport forwarding path network entity is determined by this control entity (e.g., the software defined network controller entity or functionality) or by the P-CSCF. Necessary interfaces are typically already available in the platform controller and are used by the P-CSCF as part of the registration of SIP users (determination of the PANI header, e2 DIAMETER query / response). This control entity (software defined network controller entity or functionality) or the P-CSCF controls the information for topology-hiding and provides the corresponding IP address information and port numbers to be used to the transport forwarding path network entity. The transport forwarding path network entity will make the appropriate modifications via programmable hardware (NIC) and modify each media data stream (flow) individually according to the instructions without wasting time. End-to-end encryption can also be implemented in a simplified manner via this control, thus eliminating the need to use an end-to-access edge encryption scheme that is disadvantageous due to security considerations.

According to the present invention, it is furthermore advantageously possible and preferred that regarding the first media flow and/or regarding the second media flow the first transport forwarding path network entity and/or the second transport forwarding path network entity realize a network address translation functionality, wherein especially regarding both the first media flow and the second media flow, solely the first transport forwarding path network entity and/or the second transport forwarding path network entity realize a network address translation functionality, wherein especially at most three different, RTP sessions, real-time transfer protocol sessions, and/or three different RTCP sessions, real-time transfer control protocol sessions, are realized, per media flow, between the calling party and the called party.

It is thereby advantageously possible to route the first and second media flow in an efficient manner.

According to the present invention, it is advantageously furthermore possible and preferred that the first transport forwarding path network entity and/or the second transport forwarding path network entity are realized or implemented as or as part of a broadband network gateway or by means of a programmable broadband network switch, especially as part of a central office point of delivery or as part of a data center.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

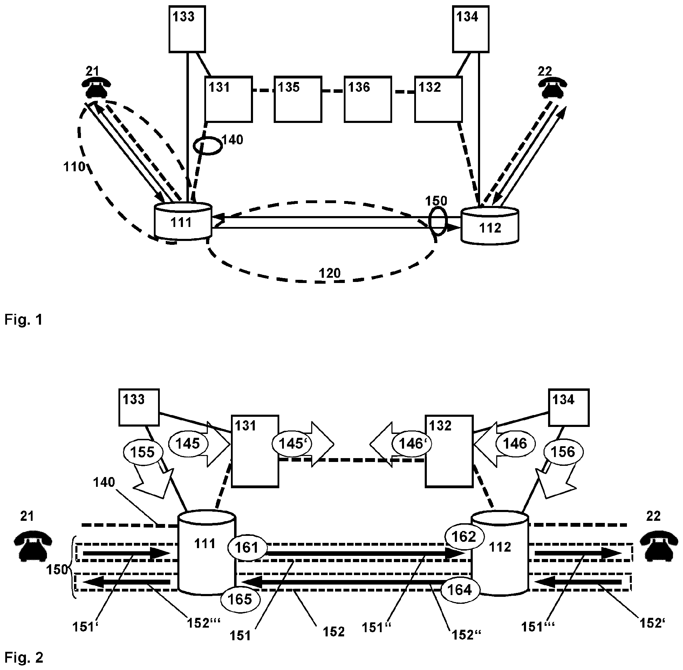

Figure 1 schematically illustrates a telecommunications network comprising a calling party and a called party as well as an access and/or aggregation network and an internet protocol backbone network, wherein both the calling party and the called party are connected, by means of their respective access and/or aggregation network, to a respective transport forwarding path network entity (such as a broadband access gateway), and the transport forwarding path network entities are connected with each other via the internet protocol backbone network.
Figure 2 schematically illustrates a Voice-over-IP communication session and/or its initiation and/or establishment between the calling party and the called party, the voice-over-IP session comprising a signaling session and a media flow session, the media flow session comprising a first media flow in the direction from the calling party to the called party as well as a second media flow in the direction from the called party to the calling party.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 exemplarily comprising a calling party 21 and a called party 22 as well as an access and/or aggregation network 110 (exemplarily shown, in Figure 1 only for the calling party 21) and an internet protocol backbone network 120. Both the calling party 21 and the called party 22 are connected, by means of their respective access and/or aggregation network, to a respective transport forwarding path network entity (i.e. a first transport forwarding path network entity 111 for the calling party 21, and a second transport forwarding path network entity 112 for the called party 22). The transport forwarding path network entities 111, 112 are connected with each other via the internet protocol backbone network 120.

The telecommunications network 100 is typically able to provide communication services, such as voice communication services to a plurality of users of the telecommunications network 100; for the sake of simplicity, only the calling party 21 and the called party 22 are exemplarily shown in Figure 1 as users of the telecommunications network 100 - however, the telecommunications network 100 is typically able to provide communication services to many more users. Many such communication services, especially voice-related and/or video-related communication services are to be handled and processed as real-time services, i.e. requiring an increased quality-of-service (e.g. with respect to latency parameters, etc.) compared to other communication services. Hence, the telecommunications network 100 needs to be able to provide such increased quality-of-service communication services. Figure 1 also shows a voice-over-IP communication session, established between the calling party 21 and the called party 22, as one example according to the present invention of such a real-time communication service.

Figure 2 schematically illustrates the voice-over-IP communication session and/or its initiation and/or establishment between the calling party 21 and the called party 22, the voice-over-IP session comprising a signaling session 140 and a media flow session150, the media flow session 150 comprising a first media flow 151 in the direction from the calling party 21 to the called party 22 as well as a second media flow 152 in the direction from the called party 22 to the calling party 21. In the following, both Figures 1 and 2 are described together.

According to the present invention, both the signaling session 140 and the media flow session 150 (or its parts) is/are routed via the first transport forwarding path network entity 111 and the second transport forwarding path network entity 112. Furthermore according to the present invention, the calling party 21 is associated or assigned to a (also called first) proxy call state control function entity or functionality 131, and the called party 22 is likewise associated or assigned to another (or second) proxy call state control function entity or functionality 132. The signaling session is routed, between the first and second transport forwarding path network entities111, 112 via the first proxy call state control function entity or functionality 131, a first serving call state control function entity or functionality 135 (being assigned or associated to the calling party 21), a second serving call state control function entity or functionality 136 (being assigned or associated to the called party 22), and the second proxy call state control function entity or functionality 132.

According to the present invention, the media flow session 150 or corresponding part of the voice-over-IP communication session is initiated by means of transmitting or exchanging a session description protocol offer message 145, 145' and a session description protocol answer message 146, 146' between the first and second proxy call state control function entity or functionality 131, 132 as part of the signaling session 140.

Thereafter, or during this message exchange, the first transport forwarding path network entity 111 is configured, by a first software defined network controller entity or functionality 133, and involving at least one first configuration message 155 transmitted to the first transport forwarding path network entity 111, such that the first transport forwarding path network entity 111 implements modifications regarding data packets of the first and/or second media flow 151, 152 on a session-by-session basis and dependent on at least a part of the content of the session description protocol offer message 145, 145' and the session description protocol answer message 146, 146'. For example, in order to realize topology hiding, the at least the first transport forwarding path network entity 111 is configured such that, regarding the first media flow 151, a first internet protocol source configuration 161 is used, and, regarding the second media flow 152, a second internet protocol destination configuration 165 is used, wherein the first internet protocol source and the second internet protocol destination configurations 161, 165 of the first transport forwarding path network entity 111 are internet protocol configurations such that the first transport forwarding path network entity 111 is defined as an endpoint of the media flow session 150, thereby realizing topology-hiding (of elements 'behind' the first transport forwarding path network entity 111 from the perspective of the second transport forwarding path network entity 112) with respect to the second transport forwarding path network entity 112.

Preferably according to the present invention, the control message and/or the further control message especially relate to messages according to the H.248 protocol, Megaco Gateway Control Protocol, and/or
wherein the first and/or second configuration message relate to the Openflow communications protocol,

Likewise, it is preferred according to the present invention that also the second transport forwarding path network entity 112 is configured by means of using the first software defined network entity or functionality 133 or a second software defined network entity or functionality 134, and involving at least one second configuration message 156 transmitted to the second transport forwarding path network entity 112, such that the second transport forwarding path network entity 112 implements modifications regarding data packets of the first and/or second media flow 151, 152 on a session-by-session basis and dependent on at least a part of the content of the session description protocol offer message 145, 145' and the session description protocol answer message 146, 146'. Again, for example in order to realize topology hiding, the second transport forwarding path network entity 112 is configured such that, regarding the second media flow 152, a second internet protocol source configuration 164 is used, and, regarding the first media flow 151, a first internet protocol destination configuration 165 is used, wherein the second internet protocol source and the first internet protocol destination configurations 164, 162 of the second transport forwarding path network entity 112 are internet protocol configurations such that the second transport forwarding path network entity 112 is defined as endpoints of the media flow session 150 enabling to realize topology-hiding (of elements 'behind' the second transport forwarding path network entity 112 from the perspective of the first transport forwarding path network entity 111) with respect to the first transport forwarding path network entity 111.

It is to be understood that the first and second internet protocol source and destination configurations 161, 162, 164, 165, respectively, comprise or relate preferably to an internet protocol address information and an internet protocol port information.

Especially according to the present invention, the first transport forwarding path network entity 111 and/or the second transport forwarding path network entity 112 are realized or implemented as or as part of a broadband network gateway or by means of a programmable broadband network switch, especially as part of a central office point of delivery or as part of a data center.

Especially, the first software defined network entity or functionality 133, upon at least one control message (not represented in Figure 2) received from the first proxy call state control function entity or functionality 131, transmits the at least one first configuration message 155 to the first transport forwarding path network entity 111 such that the first transport forwarding path network entity 111 implements the respective modifications regarding data packets of the first and/or second media flow 151, 152, especially modifications of the internet protocol header of these data packets, dependent on at least a part of the content of the session description protocol offer message 145, 145' and the session description protocol answer message 146, 146'. Likewise, it is preferred that the second software defined network entity or functionality 134, upon at least one further control message (not represented in Figure 2) received from the second proxy call state control function entity or functionality 132, transmits the at least one second configuration message 156 to the second transport forwarding path network entity 112 such that the second transport forwarding path network entity 112 implements the respective modifications regarding data packets of the first and/or second media flow 151, 152, especially modifications of the internet protocol header of these data packets, dependent on at least a part of the content of the session description protocol offer message 145, 145' and the session description protocol answer message 146, 146'.

As shown in Figure 2, the calling party 21 preferably transmits the session description protocol offer message according to a first version 145 thereof, comprising, as an endpoint address information of or regarding the media flow session 150, the address information of the calling party 21, and wherein the first proxy call state control function entity or functionality 131 transmits the session description protocol offer message according to a second version 145' thereof, comprising, as an endpoint address information of or regarding the media flow session 150, the address information of the first transport forwarding path network entity 111. Furthermore, either alternatively or cumulatively, the called party 22 transmits the session description protocol answer message according to a first version 146 thereof, comprising, as an endpoint address information of or regarding the media flow session 150, the address information of the called party 22, and wherein the second proxy call state control function entity or functionality 132 transmits the session description protocol answer message according to a second version 146' thereof, comprising, as an endpoint address information of or regarding the media flow session 150, the address information of the second transport forwarding path network entity 112.

It is furthermore preferred according to the present invention that regarding the first media flow 151 and/or regarding the second media flow 152, the first transport forwarding path network entity 111 and/or the second transport forwarding path network entity 112 realize a network address translation functionality, wherein especially regarding both the first media flow 151 and the second media flow 152, solely the first transport forwarding path network entity 111 and/or the second transport forwarding path network entity 112 realize such a network address translation functionality. Especially according to the present invention, at most three different, RTP sessions 151', 151", 151‴, 152', 152", 152'", real-time transfer protocol sessions, and/or three different RTCP sessions, real-time transfer control protocol sessions, are realized, per media flow, between the calling party 21 and the called party 22.

In the following, a preferred embodiment or process according to the present invention is described:
First processing step: For a voice connection (or a voice-over-IP connection), a setup request (i.e. a SIP INVITE message) is generated by means of the A subscriber (calling party 21) dialing the phone number of the B subscriber (called party 22). This information is converted using the SIP protocol and transmitted from the A subscriber's terminal 21 and directed to the corresponding P-CSCF (i.e. the first proxy call state control function entity or functionality 131). The transmission path is via the broadband access server (BNG or DISAGGREGATED BNG ARCHITECTURES component) (i.e. the transport forwarding path network entity 111) or transport forwarding path network entity 111. In this process, the A subscriber (calling party 21) sends the information for receiving the media data streams as part of the SIP message (these are contained in the so-called session description protocol, SDP, as part of the SIP message). This corresponds to the so-called SDP Offer, or session description protocol offer message.

Second processing step: The P-CSCF (i.e. the first proxy call state control function entity or functionality 131) of the A subscriber (originating user or calling party 21) receives the SIP INVITE message and addresses an SDN controller (i.e. the first software defined network entity or functionality 133). Using a control protocol (such as H.248), the SDP content received (by the proxy call state control function entity or functionality 131) from the A subscriber (calling party 21) is sent to the SDN controller 133 so that it is prepared to send media stream packets (especially using the real-time protocol, RTP, as well as the real-time control protocol, RTCP) to the A subscriber 21. The SDN controller 133 learns the associated broadband access server (i.e. the transport forwarding path network entity 111) from the H.248 protocol (the P-CSCF 131 learned this information from a platform controller entity (of the telecommunications network 100) during SIP user registration) - or the SDN controller 133 makes a query to the platform controller entity. The SDN controller 133 reserves the IP addresses and port numbers of the transport forwarding path network entity 111 (i.e. the first internet protocol source configuration 161 and the second internet protocol destination configuration 165) for receiving media streams from the B subscriber's (called party's 22) broadband access server (or transport forwarding path network entity 112). This information is sent by the SDN Controller 133 to the A subscriber's P-CSCF 131. The SDN controller 133 informs the transport forwarding path network entity 111 about an appropriate NAT rule to be set up using a SDN control protocol, e.g., Openflow.

Third processing step: The P-CSCF 131 modifies the SIP message (i.e. the first version 141 of the session description protocol offer message), received from the A subscriber 21, and enters the IP address and port number (i.e. the first internet protocol source configuration 161 and the second internet protocol destination configuration 165) of the transport forwarding path network entity 111.

Based on this information, certain use cases can already be applied, e.g. to play a ring tone or an announcement to the A-subscriber 21. However, the A subscriber 21 cannot yet send media data streams at this point to the B-subscriber 22 (or called party 22), since it does not yet know the IP addresses and port numbers (second internet protocol source configuration 164 and first internet protocol destination configuration 165) to be used for both media flows 151, 152 of the media data stream or media flow session 150. The SIP message is transmitted to the S-CSCF (i.e. the first serving call state control function entity or functionality 135) of the A subscriber 21.

Fourth processing step: The S-CSCF 135 then executes application services and authorization checks regarding the A subscriber 21, if necessary; however, for the sake of simplicity, this is not detailed here. Furthermore, the target systems for the B subscriber (i.e. the called party 22) are determined. Figures 1 and 2 represent the situation or use case where the terminating user (i.e. the called party 22) is also a user within the telecommunications network's 100 voice-over-IP IMS (IP multimedia subsystem) solution. In this case, the S-CSCF (i.e. the second serving call state control function entity or functionality 136) of the B subscriber (called party 22) is found and the SIP message is forwarded accordingly.

Fifth processing step: The S-CSCF of the B subscriber (terminating S-CSCF, or second serving call state control function entity or functionality 136) then initiates the application services of the B subscriber (called party 22) and, if necessary, performs authorization checks for the B subscriber 22.

Sixth processing step: After that, the S-CSCF 136 forwards the SIP message to the terminating P-CSCF (P-CSCF of the B subscriber, i.e. the second proxy call state control function entity or functionality 132). The SDP content (of the second version 141' of the session description protocol offer message) is typically unchanged according to the information entered by the originating P-CSCF (P-CSCF of the A subscriber, or first proxy call state control function entity or functionality 131). The P-CSCF of the B subscriber (or second proxy call state control function entity or functionality 132) then contacts an SDN controller (i.e. the corresponding second software defined network entity or functionality 134) via, e.g., H.248 and transmit the SDP content to it. The selected SDN controller 134 might but does not necessarily need to be identical to the SDN controller 133 used by the P-CSCF 131 of the A subscriber 21.

Seventh processing step: The SDN controller (i.e. the second software defined network entity or functionality 134) thus learns to which IP address and port number (i.e. the first internet protocol source configuration 161 and the second internet protocol destination configuration 165) it has to transmit media data streams from the terminating user (B subscriber 22) and directed to the originating user (A subscriber 21). The SDN controller 134 then determines the associated broadband access server (i.e. the second transport forwarding path network entity 112); there are typically two options to do this: a) the SDN controller 134 learns the associated transport forwarding path network entity 112 from the H.248 protocol (the P-CSCF 132 learned this information from the platform controller during SIP user registration), or b) the broadband access server (second transport forwarding path network entity 112) makes a query to the platform controller. The SDN controller 134 has a topology database and knows the IP addresses assigned to the transport forwarding path network entities and selects them accordingly. In its response to the terminating P-CSCF 132, the SDN controller 134 sends along the information to which IP address and port number (i.e. the second internet protocol source configuration 164 and the first internet protocol destination configuration 162) of the broadband access server (or second transport forwarding path network entity 112) the terminating user (or called party 22) has to send its media streams. The SDN controller 134 informs the transport forwarding path network entity 112 about a NAT rule to be set up accordingly using an SDN control protocol, e.g., the Openflow protocol.

Eighth processing step: This information is used by the P-CSCF (i.e. the second proxy call state control function entity or functionality 132) and the SDP content (of a first version 142 of the session description protocol answer message) is modified again (into a second version 142' of the session description protocol answer message). The IP addresses/port numbers (i.e. the second internet protocol source configuration 164 and the first internet protocol destination configuration 162) of the terminating broadband access servers (i.e. the second transport forwarding path network entity 112) are now entered. The terminating P-CSCF 132 modifies further content of the SIP message if necessary and transmits it in the transmission path via the broadband access server (BNG or DISAGGREGATED BNG ARCHITECTURES component), i.e. the second transport forwarding path network entity 112.

Ninth processing step: The terminating user (B subscriber 22) now receives a voice call setup request and rings the device (of the called party 22) if necessary. In case the handset is picked up, a confirmation message (SIP 200 OK) is sent to the terminating P-CSCF 132 (P-CSCF of the B subscriber 22). There is typically also an SDP part included (SDP Answer); among other things, this comprises the IP address and port number (i.e. the second internet protocol source configuration 164 and the first internet protocol destination configuration 162) at which the terminating user 22 wants to receive the media data streams.

Tenth processing step: Upon receipt of the voice call setup request (SIP INVITE) and an associated SDP (SDP Offer) at the B subscriber 22, RTP / RTCP packets are able to be transmitted from the B subscriber 22 to the A subscriber 21.

Eleventh processing step: Upon receipt of the SIP Acknowledge message (SIP 200 OK) and the associated SDP Answer (session description protocol answer message 142) at the terminating P-CSCF (second proxy call state control function entity or functionality 132), the corresponding IP Address and Port Number information is converted to the H.248 control protocol and sent from the B-subscriber's P-CSCF 132 to the terminating user's (B-subscriber 22) SDN Controller 134.

Twelfth processing step: The SDN controller 134 uses the associated broadband access server, i.e. the transport forwarding path network entity 111 (determined from or at the seventh processing step, i.e. the first internet protocol source configuration 161 and the second internet protocol destination configuration 165). The SDN controller 134 has a topology database and knows the IP addresses assigned to the transport forwarding path network entity and selects them accordingly. In its response to the terminating P-CSCF (i.e. the second proxy call state control function entity or functionality 132), the SDN controller 134 sends along the information to which IP address and port number of the broadband access server (i.e. the first transport forwarding path network entity 111) of the terminating user (B subscriber 22), the broadband access server of the originating user 21 has to send its media data streams. The SDN controller 134 informs the transport forwarding path network entity 112 about a NAT rule to be set up accordingly using an SDN control protocol, e.g., Openflow protocol.

Thirteenth processing step: The P-CSCF terminating (P-CSCF 132 of the B subscriber 22) then modifies the SDP portion of the 200 OK message (i.e. the session description protocol answer message) accordingly and transmit this information via the (terminating) S-CSCF 136 and via the originating S-CSCF 135 to the P-CSCF originating (P-CSCF 132 of the A subscriber 21). This in turn will contact the already selected SDN controllers 133 and transmit the corresponding SDP content (of the 200 OK message).

Fourteenth processing step: The originating user's (A subscriber's) SDN controller 133 learns (especially via protocol H-248) and via the received SDP content the IP address and port numbers (i.e. the second internet protocol source configuration 164 and the first internet protocol destination configuration 162) where the media data stream (received from the A subscriber 21) is to be sent to (i.e. B subscriber's transport forwarding path network entity 112). This information is sent to the transport forwarding path network entity 111 using SDN control protocol. In its response using H248, the originating subscriber's SDN controller 133 tells to which IP address and port number the A subscriber 21 has to send its media streams.

Fifteenth processing step: The P-CSCF 131 of the A-subscriber 21 will now modify the content of the SDP Answer (i.e. generates the second version 142' of the session description protocol answer message) and send the corresponding SIP message to the originating user (A-subscriber 21). The A subscriber 21 will now learn to which IP address it has to send its media stream, directed to the B subscriber 22.

Sixteenth processing step: RTP packets, sent by the A subscriber 21, are able to be transmitted to the B subscriber 22.

The SDP Offer / SDP Answer (i.e. the session description protocol offer and answer messages are important to be transmitted using the signaling session 140; there may be many variants of SDP Offer and Answer transmission: For example, an SDP Offer can also be sent first with the 200OK message and the A subscriber 21 then sends a Re-Invite SIP message with the SDP Answer (so-called Late Offer); or the SDP Answer is sent with a ringing message.
Typically for a two-way (or bidirectional) communication, there are two RTP data streams (or RTP sessions) and two RTCP data streams (or RTCP sessions), one each from the A subscriber 21 to the B subscriber 22 and one each from the B subscriber 22 to the A subscriber 21. These have normally different identifiers in the RTP (SSRC: Synchronization source identifier).
Furthermore, the media stream can either be synchronous, or asynchronous. In case of synchronous media stream, IP addresses and port numbers sending and receiving (at the respective component) are identical. In the IMS, preferably or only symmetric media data streams shall be supported.

According to the present invention, depending on implementation decisions, there may be a few, highly redundant SDN controllers (or software defined network entities or functionalities 133, 134) that all have the same dataset - or several (per VoSA site, i.e. part of the infrastructure of the telecommunications network providing dedicated server and network infrastructure for both signaling and media plane; typically distributed at a comparatively low number of locations) that also all have the same dataset but not necessarily the same session set. Depending on an implementation decision, it may not matter which SDN controller is requested by the respective proxy call state control function 131, 132 and/or in relation to the calling party 21 or called party 22. In this respect, no selection decision of a suitable SDN controller has to be made by the respective P-CSCF.

Preparatorily and as a one-time setup, each broadband access server (or transport forwarding path network entity) receives two dedicated IPv4 and two dedicated IPv6 addresses. These are set up via static routing on a null device and propagated accordingly via BGP or a suitable Interior protocol such as ISIS. The SDN controllers 133, 134 know the assigned IP addresses of the broadband access servers (or transport forwarding path network entities).

## Claims

1. Method for realizing Voice-over-IP communication sessions between a calling party (21) and a called party (22) using a telecommunications network (100) comprising an access and/or aggregation network (110) and an internet protocol backbone network (120), wherein each voice-over-IP communication session comprises a signaling session (140) and a media flow session (150), wherein both the signaling session (140) and the media flow session (150) are routed via a first transport forwarding path network entity (111) and a second transport forwarding path network entity (112), the calling party (21) being associated or assigned to a first proxy call state control function entity or functionality (131) and the called party (22) being associated or assigned to a second proxy call state control function entity or functionality (132), and the media flow session (150) comprising a first media flow (151) in the direction from the calling party (21) to the called party (22) as well as a second media flow (152) in the direction from the called party (22) to the calling party (21), wherein the method comprises the following steps:
-- in a first step, the media flow session (150) of the voice-over-IP communication session is initiated by means of transmitting or exchanging a session description protocol offer message (145, 145') and a session description protocol answer message (146, 146') between the first and second proxy call state control function entity or functionality (131, 132) as part of the signaling session (140), and
-- in a second step, after or during the first step, the first transport forwarding path network entity (111) is configured, by a first software defined network controller entity or functionality (133), and involving at least one first configuration message (155) transmitted to the first transport forwarding path network entity (111), such that the first transport forwarding path network entity (111) implements modifications regarding endpoint address information of data packets of the first and/or second media flow (151, 152) on a session-by-session basis and dependent on at least a part of the content of the session description protocol offer message (145, 145') and the session description protocol answer message (146, 146'),
wherein, during the first step, the calling party (21) transmits the session description protocol offer message according to a first version (145) thereof, comprising, as an endpoint address information of or regarding the media flow session (150), the address information of the calling party (21), and wherein the first proxy call state control function entity or functionality (131) transmits the session description protocol offer message according to a second version (145') thereof, comprising, as an endpoint address information of or regarding the media flow session (150), the address information of the first transport forwarding path network entity (111), and/or wherein, during the first step, the called party (22) transmits the session description protocol answer message according to a first version (146) thereof, comprising, as an endpoint address information of or regarding the media flow session (150), the address information of the called party (22), and wherein the second proxy call state control function entity or functionality (132) transmits the session description protocol answer message according to a second version (146') thereof, comprising, as an endpoint address information of or regarding the media flow session (150), the address information of the second transport forwarding path network entity (112).

2. Method according to claim 1, wherein during the second step, also the second transport forwarding path network entity (112) is configured by means of using the first software defined network entity or functionality (133) or a second software defined network entity or functionality (134), and involving at least one second configuration message (156) transmitted to the second transport forwarding path network entity (112), such that the second transport forwarding path network entity (112) implements modifications regarding data packets of the first and/or second media flow (151, 152) on a session-by-session basis and dependent on at least a part of the content of the session description protocol offer message (145, 145') and the session description protocol answer message (146, 146').

3. Method according to one of the preceding claims, wherein
-- by means of its configuration due to the at least one first configuration message (155), the first transport forwarding path network entity (111) realizes and/or
-- by means of its configuration due to the at least one second configuration message (156), the second transport forwarding path network entity (112) realizes at least one out of the following:
-- traffic gating over either IPv4 or IPv6
-- security, especially encryption, for the media stream being sent towards the calling party (21) and/or the called party (22),
-- topology hiding for IPv4 and/or IPv6,
-- bridging between IPv4 and IPv6 or between IPv6 and IPv4,
-- optimal media path,
-- type-of-service and/or quality-of-service,
-- helping network address translation traversal.

4. Method according to one of the preceding claims, wherein the first software defined network entity or functionality (133), upon at least one control message received from the first proxy call state control function entity or functionality (131), transmits the at least one first configuration message (155) to the first transport forwarding path network entity (111) such that the first transport forwarding path network entity (111) implements the respective modifications regarding data packets of the first and/or second media flow (151, 152), especially modifications of the internet protocol header of these data packets, dependent on at least a part of the content of the session description protocol offer message (145, 145') and the session description protocol answer message (146, 146'),
wherein especially, regarding the first media flow (151), a first internet protocol source configuration (161) is used, and, regarding the second media flow (152), a second internet protocol destination configuration (165) is used,
the first internet protocol source and the second internet protocol destination configurations (161, 165) of the first broadband access gateway (111) being internet protocol configurations defining the first transport forwarding path network entity (111) as endpoint of the media flow session (150) enabling to realize topology-hiding with respect to the second broadband access gateway (112).

5. Method according to one of the preceding claims, wherein the second software defined network entity or functionality (134), upon at least one further control message received from the second proxy call state control function entity or functionality (132), transmits the at least one second configuration message (156) to the second transport forwarding path network entity (112) such that the second transport forwarding path network entity (112) implements the respective modifications regarding data packets of the first and/or second media flow (151, 152), especially modifications of the internet protocol header of these data packets, dependent on at least a part of the content of the session description protocol offer message (145, 145') and the session description protocol answer message (146, 146'),
wherein especially, regarding the second media flow (152), a second internet protocol source configuration (164) is used, and, regarding the first media flow (151), a first internet protocol destination configuration (162) is used,
the second internet protocol source and the first internet protocol destination configurations (162, 164) of the second transport forwarding path network entity (112) being internet protocol configurations defining the second transport forwarding path network entity (112) as endpoint of the media flow session (150) enabling to realize topology-hiding with respect to the first transport forwarding path network entity (111).

6. Method according to one of the preceding claims, wherein the first transport forwarding path network entity (111) corresponds to an entity specifically assigned to the calling party (21) and the first software defined network entity or functionality (133), upon at least the one control message received from the first proxy call state control function entity or functionality (131), determines the first transport forwarding path network entity (111) corresponding to the calling party (21) and/or.
wherein the second transport forwarding path network entity (112) corresponds to an entity specifically assigned to the called party (22) and the second software defined network entity or functionality (134), upon at least the one control message received from the second proxy call state control function entity or functionality (132), determines the second transport forwarding path network entity (112) corresponding to the called party (22).

7. Method according to one of the preceding claims, wherein the control message and/or the further control message especially relate to messages according to a media gateway control protocol, MGCP, such as the H.248 protocol, the Megaco Gateway Control Protocol, and/or
wherein the first and/or second configuration message relate to messages of a signaling protocol between the software defined network controller and the controlled network element, such as the Openflow communications protocol,
wherein especially the first and second internet protocol source and destination configurations (161, 162, 164, 165), respectively, comprise or relate to an internet protocol address information and to an internet protocol port information.

8. Method according to one of the preceding claims, wherein regarding the first media flow (151) and/or regarding the second media flow (152) the first transport forwarding path network entity (111) and/or the second transport forwarding path network entity (112) realize a network address translation functionality, wherein especially regarding both the first media flow (151) and the second media flow (152), solely the first transport forwarding path network entity (111) and/or the second transport forwarding path network entity (112) realize a network address translation functionality, wherein especially at most three different, RTP sessions (151', 151", 151‴, 152', 152", 152‴), real-time transfer protocol sessions, and/or three different RTCP sessions, real-time transfer control protocol sessions, are realized, per media flow, between the calling party (21) and the called party (22).

9. Method according to one of the preceding claims, wherein the first transport forwarding path network entity (111) and/or the second transport forwarding path network entity (112) are realized or implemented as or as part of a broadband network gateway or by means of a programmable broadband network switch, especially as part of a central office point of delivery or as part of a data center.

10. Telecommunications network (100) for realizing Voice-over-IP communication sessions between a calling party (21) and a called party (22), the telecommunications network (100) comprising an access and/or aggregation network (110) and an internet protocol backbone network (120), wherein each voice-over-IP communication session comprises a signaling session (140) and a media flow session (150), wherein both the signaling session (140) and the media flow session (150) are routed via a first transport forwarding path network entity (111) and a second transport forwarding path network entity (112), the calling party (21) being associated or assigned to a first proxy call state control function entity or functionality (131) and the called party (22) being associated or assigned to a second proxy call state control function entity or functionality (132), and the media flow session (150) comprising a first media flow (151) in the direction from the calling party (21) to the called party (22) as well as a second media flow (152) in the direction from the called party (22) to the calling party (21), wherein the telecommunications network (100) is configured such that:
-- the media flow session (150) of the voice-over-IP communication session is initiated by means of transmitting or exchanging a session description protocol offer message (145, 145') and a session description protocol answer message (146, 146') between the first and second proxy call state control function entity or functionality (131, 132) as part of the signaling session (140),
wherein the telecommunications network (100) is configured such that calling party (21) transmits the session description protocol offer message according to a first version (145) thereof, comprising, as an endpoint address information of or regarding the media flow session (150), the address information of the calling party (21), and wherein the first proxy call state control function entity or functionality (131) is configured to transmit the session description protocol offer message according to a second version (145') thereof, comprising, as an endpoint address information of or regarding the media flow session (150), the address information of the first transport forwarding path network entity (111), and/or
wherein the telecommunications network (100) is configured such that the called party (22) transmits the session description protocol answer message according to a first version (146) thereof, comprising, as an endpoint address information of or regarding the media flow session (150), the address information of the called party (22), and wherein the second proxy call state control function entity or functionality (132) is configured to transmit the session description protocol answer message according to a second version (146') thereof, comprising, as an endpoint address information of or regarding the media flow session (150), the address information of the second transport forwarding path network entity (112), and
-- the first transport forwarding path network entity (111) is configured, by a first software defined network controller entity or functionality (133), and involving at least one first configuration message (155) transmitted to the first transport forwarding path network entity (111), such that the first transport forwarding path network entity (111) implements modifications regarding endpoint address information of data packets of the first and/or second media flow (151, 152) on a session-by-session basis and dependent on at least a part of the content of the session description protocol offer message (145, 145') and the session description protocol answer message (146, 146').

11. Proxy call state control function entity or functionality (131, 132) of a telecommunications network (100) according to claim 10 or for realizing Voice-over-IP communication sessions between a calling party (21) and a called party (22) using the telecommunications network (100) comprising an access and/or aggregation network (110) and an internet protocol backbone network (120), wherein each voice-over-IP communication session comprises a signaling session (140) and a media flow session (150), wherein both the signaling session (140) and the media flow session (150) are routed via a first transport forwarding path network entity (111) and a second transport forwarding path network entity (112), the calling party (21) being associated or assigned to a first proxy call state control function entity or functionality (131) and the called party (22) being associated or assigned to a second proxy call state control function entity or functionality (132), and the media flow session (150) comprising a first media flow (151) in the direction from the calling party (21) to the called party (22) as well as a second media flow (152) in the direction from the called party (22) to the calling party (21), wherein the transport forwarding path network entity (111, 112), the proxy call state control function entity or functionality (131, 132), and/or the software defined network entity or functionality (133, 134) is or are configured such that:
-- the media flow session (150) of the voice-over-IP communication session is initiated by means of transmitting or exchanging a session description protocol offer message (145, 145') and a session description protocol answer message (146, 146') between the first and second proxy call state control function entity or functionality (131, 132) as part of the signaling session (140),
wherein the calling party (21) transmits the session description protocol offer message according to a first version (145) thereof, comprising, as an endpoint address information of or regarding the media flow session (150), the address information of the calling party (21), and wherein the first proxy call state control function entity or functionality (131) is configured to transmit the session description protocol offer message according to a second version (145') thereof, comprising, as an endpoint address information of or regarding the media flow session (150), the address information of the first transport forwarding path network entity (111), and/or wherein the called party (22) transmits the session description protocol answer message according to a first version (146) thereof, comprising, as an endpoint address information of or regarding the media flow session (150), the address information of the called party (22), and wherein the second proxy call state control function entity or functionality (132) is configured to transmit the session description protocol answer message according to a second version (146') thereof, comprising, as an endpoint address information of or regarding the media flow session (150), the address information of the second transport forwarding path network entity (112), and
-- the first transport forwarding path network entity (111) is configured, by a first software defined network controller entity or functionality (133), and involving at least one first configuration message (155) transmitted to the first transport forwarding path network entity (111), such that the first transport forwarding path network entity (111) implements modifications regarding endpoint address information of data packets of the first and/or second media flow (151, 152) on a session-by-session basis and dependent on at least a part of the content of the session description protocol offer message (145, 145') and the session description protocol answer message (146, 146').

12. Program comprising a computer readable program code, which, when executed on a computer and/or on a transport forwarding path network entities (111, 112) and/or on a proxy call state control function entity or functionality (131, 132) and/or on a software defined network entity or functionality (133, 134) and/or on a network node of the telecommunications network (100), or in part on a transport forwarding path network entities (111, 112) and/or in part on a proxy call state control function entity or functionality (131, 132) and/or in part on a software defined network entity or functionality (133, 134) and/or in part on a network node of the telecommunications network (100), causes the computer and/or the transport forwarding path network entities (111, 112) and/or the proxy call state control function entity or functionality (131, 132) and/or the software defined network entity or functionality (133, 134) and/or the network node of the telecommunications network (100) to perform a method according one of claims 1 to 10.

13. Computer-readable medium comprising instructions which when executed on a computer and/or on a transport forwarding path network entities (111, 112) and/or on a proxy call state control function entity or functionality (131, 132) and/or on a software defined network entity or functionality (133, 134) and/or on a network node of the telecommunications network (100), or in part on a transport forwarding path network entities (111, 112) and/or in part on a proxy call state control function entity or functionality (131, 132) and/or in part on a software defined network entity or functionality (133, 134) and/or in part on a network node of the telecommunications network (100), causes the computer and/or the transport forwarding path network entities (111, 112) and/or the proxy call state control function entity or functionality (131, 132) and/or the software defined network entity or functionality (133, 134) and/or the network node of the telecommunications network (100) to perform a method according one of claims 1 to 10.

## Patentansprüche

1. Verfahren zum Realisieren von Voice-over-IP-Kommunikationssitzungen zwischen einem rufenden Teilnehmer (21) und einem gerufenen Teilnehmer (22) unter Verwendung eines Telekommunikationsnetzes (100), das ein Zugangs- und/oder Aggregationsnetz (110) und ein Internetprotokoll-Backbone-Netz (120) umfasst, wobei jede Voice-over-IP-Kommunikationssitzung eine Signalisierungssitzung (140) und eine Medienflusssitzung (150) umfasst, wobei sowohl die Signalisierungssitzung (140) als auch die Medienflusssitzung (150) über eine erste Transportweiterleitungspfad-Netzentität (111) und eine zweite Transportweiterleitungspfad-Netzentität (112) geroutet werden, wobei sowohl die Signalisierungssitzung (140) als auch die Medienflusssitzung (150) über eine erste Transportweiterleitungspfad-Netzentität (111) und eine zweite Transportweiterleitungspfad-Netzentität (112) geleitet werden, wobei der rufende Teilnehmer (21) einer ersten Proxy-Rufzustandssteuerungsfunktionsentität oder -funktionalität (131) zugewiesen oder damit verknüpft ist und der gerufene Teilnehmer (22) einer zweiten Proxy-Rufzustandssteuerungsfunktionsentität oder -funktionalität (132) zugewiesen oder damit verknüpft ist, und wobei die Medienflusssitzung (150) einen ersten Medienfluss (151) in der Richtung von dem rufenden Teilnehmer (21) zu dem gerufenen Teilnehmer (22) sowie einen zweiten Medienfluss (152) in der Richtung von dem gerufenen Teilnehmer (22) zu dem rufenden Teilnehmer (21) umfasst, wobei das Verfahren die folgenden Schritte umfasst:
- in einem ersten Schritt wird die Medienflusssitzung (150) der Voice-over-IP-Kommunikationssitzung durch Senden oder Austauschen einer Sitzungsbeschreibungsprotokoll-Angebotsnachricht (145, 145') und einer Sitzungsbeschreibungsprotokoll-Antwortnachricht (146, 146') zwischen der ersten und der zweiten Proxy-Rufzustandssteuerungsfunktionsentität oder -funktionalität (131, 132) als Teil der Signalisierungssitzung (140) initiiert, und
- in einem zweiten Schritt, nach oder während dem ersten Schritt, wird die erste Transportweiterleitungspfad-Netzentität (111) durch eine erste softwaredefinierte Netz-Controller-Entität oder -funktionalität (133) und unter Einbeziehung mindestens einer ersten Konfigurationsnachricht (155), die an die erste Transportweiterleitungspfad-Netzentität (111) gesendet wird, so konfiguriert, dass die erste Transportweiterleitungspfad-Netzentität (111) Modifikationen in Bezug auf Endpunktadressinformationen von Datenpaketen des ersten und/oder des zweiten Medienflusses (151, 152) Sitzung für Sitzung und in Abhängigkeit von mindestens einem Teil des Inhalts der Sitzungsbeschreibungsprotokoll-Angebotsnachricht (145, 145') und der Sitzungsbeschreibungsprotokoll-Antwortnachricht (146, 146') implementiert,
wobei, während des ersten Schrittes, der rufende Teilnehmer (21) die Sitzungsbeschreibungsprotokoll-Angebotsnachricht gemäß einer ersten Version (145) von ihr sendet, die als eine Endpunktadressinformation der, oder bezüglich der, Medienflusssitzung (150) die Adressinformation des rufenden Teilnehmers (21) umfasst, und wobei die erste Proxy-Rufzustandssteuerungsfunktionsentität oder -funktionalität (131) die Sitzungsbeschreibungsprotokoll-Angebotsnachricht gemäß einer zweiten Version (145') von ihr sendet, die als eine Endpunktadressinformation der, oder bezüglich der, Medienflusssitzung (150) die Adressinformation der ersten Transportweiterleitungspfad-Netzentität (111) umfasst, und/oder
wobei, während des ersten Schrittes, der gerufene Teilnehmer (22) die Sitzungsbeschreibungsprotokoll-Antwortnachricht gemäß einer ersten Version (146) von ihr sendet, die als eine Endpunktadressinformation der, oder bezüglich der, Medienflusssitzung (150) die Adressinformation des gerufenen Teilnehmers (22) umfasst, und wobei die zweite Proxy-Rufzustandssteuerungsfunktionsentität oder -funktionalität (132) die Sitzungsbeschreibungsprotokoll-Antwortnachricht gemäß einer zweiten Version (146') von ihr sendet, die als eine Endpunktadressinformation der, oder bezüglich der, Medienflusssitzung (150) die Adressinformation der zweiten Transportweiterleitungspfad-Netzentität (112) umfasst.

2. Verfahren nach Anspruch 1, wobei während des zweiten Schrittes auch die zweite Transportweiterleitungspfad-Netzentität (112) unter Verwendung der ersten softwaredefinierten Netzentität oder -funktionalität (133) oder einer zweiten softwaredefinierten Netzentität oder -funktionalität (134) und unter Einbeziehung mindestens einer zweiten Konfigurationsnachricht (156), die an die zweite Transportweiterleitungspfad-Netzentität (112) gesendet wird, so konfiguriert wird, dass die zweite Transportweiterleitungspfad-Netzentität (112) Modifikationen in Bezug auf Datenpakete des ersten und/oder des zweiten Medienflusses (151, 152) Sitzung für Sitzung und in Abhängigkeit von mindestens einem Teil des Inhalts der Sitzungsbeschreibungsprotokoll-Angebotsnachricht (145, 145') und der Sitzungsbeschreibungsprotokoll-Antwortnachricht (146, 146') implementiert.

3. Verfahren nach einem der vorangehenden Ansprüche, wobei
- die erste Transportweiterleitungspfad-Netzentität (111) mittels ihrer Konfiguration aufgrund der mindestens einen ersten Konfigurationsnachricht (155) mindestens eines von Folgendem realisiert und/oder
- die zweite Transportweiterleitungspfad-Netzentität (112) mittels ihrer Konfiguration aufgrund der mindestens einen zweiten Konfigurationsnachricht (156) mindestens eines von Folgendem realisiert:
- Verkehrslenkung entweder über IPv4 oder IPv6,
- Sicherheit, insbesondere Verschlüsselung, für den Medien-Stream, der an den rufenden Teilnehmer (21) und/oder den gerufenen Teilnehmer (22) gesendet wird,
- Topologieverschleierung für IPv4 und/oder IPv6,
- Überbrückung zwischen IPv4 und IPv6 oder zwischen IPv6 und IPv4,
- optimaler Medienpfad,
- Dienst-Typ und/oder Dienst-Qualität,
- Hilfe beim Network Address Translation-Traversal.

4. Verfahren nach einem der vorangehenden Ansprüche, wobei die erste softwaredefinierte Netzentität oder -funktionalität (133) auf mindestens eine von der ersten Proxy-Rufzustandssteuerungsfunktionsentität oder -funktionalität (131) empfangene Steuerungsnachricht hin die mindestens eine erste Konfigurationsnachricht (155) an die erste Transportweiterleitungspfad-Netzentität (111) sendet, dergestalt, dass die erste Transportweiterleitungspfad-Netzentität (111) die jeweiligen Modifikationen in Bezug auf Datenpakete des ersten und/oder des zweiten Medienflusses (151, 152), insbesondere Modifikationen des Internetprotokoll-Headers dieser Datenpakete, in Abhängigkeit von mindestens einem Teil des Inhalts der Sitzungsbeschreibungsprotokoll-Angebotsnachricht (145, 145') und der Sitzungsbeschreibungsprotokoll-Antwortnachricht (146, 146') implementiert,
wobei insbesondere in Bezug auf den ersten Medienfluss (151) eine erste Internetprotokoll-Quellenkonfiguration (161) verwendet wird und in Bezug auf den zweiten Medienfluss (152) eine zweite Internetprotokoll-Zielkonfiguration (165) verwendet wird,
die erste Internetprotokoll-Quellenkonfiguration und die zweite Internetprotokoll-Zielkonfiguration (161, 165) des ersten Breitband-Zugangs-Gateways (111) Internetprotokoll-Konfigurationen sind, die die erste Transportweiterleitungspfad-Netzentität (111) als Endpunkt der Medienflusssitzung (150) definieren, was es ermöglicht, Topologieverschleierung in Bezug auf den zweiten Breitband-Zugangs-Gateway (112) zu realisieren.

5. Verfahren nach einem der vorangehenden Ansprüche, wobei die zweite softwaredefinierte Netzentität oder -funktionalität (134) auf mindestens eine weitere von der zweiten Proxy-Rufzustandssteuerungsfunktionsentität oder -funktionalität (132) empfangene Steuerungsnachricht hin die mindestens eine zweite Konfigurationsnachricht (156) an die zweite Transportweiterleitungspfad-Netzentität (112) sendet, dergestalt, dass die zweite Transportweiterleitungspfad-Netzentität (112) die jeweiligen Modifikationen in Bezug auf Datenpakete des ersten und/oder des zweiten Medienflusses (151, 152), insbesondere Modifikationen des Internetprotokoll-Headers dieser Datenpakete, in Abhängigkeit von mindestens einem Teil des Inhalts der Sitzungsbeschreibungsprotokoll-Angebotsnachricht (145, 145') und der Sitzungsbeschreibungsprotokoll-Antwortnachricht (146, 146') implementiert,
wobei insbesondere in Bezug auf den zweiten Medienfluss (152) eine zweite Internetprotokoll-Quellenkonfiguration (164) verwendet wird und in Bezug auf den ersten Medienfluss (151) eine erste Internetprotokoll-Zielkonfiguration (162) verwendet wird,
wobei die zweite Internetprotokoll-Quellenkonfiguration und die erste Internetprotokoll-Zielkonfiguration (162, 164) der zweiten Transportweiterleitungspfad-Netzentität (112) Internetprotokoll-Konfigurationen sind, die die zweite Transportweiterleitungspfad-Netzentität (112) als Endpunkt der Medienflusssitzung (150) definieren, was es ermöglicht, Topologieverschleierung in Bezug auf die erste Transportweiterleitungspfad-Netzentität (111) zu realisieren.

6. Verfahren nach einem der vorangehenden Ansprüche, wobei die erste Transportweiterleitungspfad-Netzentität (111) einer Entität entspricht, die speziell dem rufenden Teilnehmer (21) zugewiesen ist, und die erste softwaredefinierte Netzentität oder -funktionalität (133) auf mindestens die eine von der ersten Proxy-Rufzustandssteuerungsfunktionsentität oder -funktionalität (131) empfangene Steuerungsnachricht hin die erste Transportweiterleitungspfad-Netzentität (111) bestimmt, die dem rufenden Teilnehmer (21) entspricht, und/oder wobei die zweite Transportweiterleitungspfad-Netzentität (112) einer Entität entspricht, die speziell dem gerufenen Teilnehmer (22) zugewiesen ist, und die zweite softwaredefinierte Netzentität oder -funktionalität (134) auf mindestens die eine von der zweiten Proxy-Rufzustandssteuerungsfunktionsentität oder -funktionalität (132) empfangene Steuerungsnachricht hin die zweite Transportweiterleitungspfad-Netzentität (112) bestimmt, die dem gerufenen Teilnehmer (22) entspricht.

7. Verfahren nach einem der vorangehenden Ansprüche, wobei sich die Steuerungsnachricht und/oder die weitere Steuerungsnachricht insbesondere auf Nachrichten gemäß einem Media Gateway Control Protocol (MGCP), wie zum Beispiel dem H.248-Protokoll, oder dem Megaco Gateway Control Protocol beziehen, und/oder
wobei sich die erste und/oder die zweite Konfigurationsnachricht auf Nachrichten eines Signalisierungsprotokolls zwischen dem softwaredefinierten Netz-Controller und dem gesteuerten Netzelement, wie zum Beispiel dem Openflow-Kommunikationsprotokoll, bezieht, wobei insbesondere die erste und die zweite Internetprotokoll-Quellenkonfiguration
und -Zielkonfiguration (161, 162, 164, 165) jeweils eine Internetprotokoll-Adressinformation und eine Internetprotokoll-Port-Information umfassen oder sich darauf beziehen.

8. Verfahren nach einem der vorangehenden Ansprüche, wobei bezüglich des ersten Medienflusses (151) und/oder bezüglich des zweiten Medienflusses (152) die erste Transportweiterleitungspfad-Netzentität (111) und/oder die zweite Transportweiterleitungspfad-Netzentität (112) eine Netzadressenübersetzungsfunktionalität realisieren, wobei insbesondere bezüglich sowohl des ersten Medienflusses (151) als auch des zweiten Medienflusses (152) nur die erste Transportweiterleitungspfad-Netzentität (111) und/oder die zweite Transportweiterleitungspfad-Netzentität (112) eine Netzadressenübersetzungsfunktionalität realisieren, wobei insbesondere höchstens drei verschiedene Real-Time Transfer Protocol (RTP)-Sitzungen (151', 151", 151‴, 152', 152", 152‴) und/oder drei verschiedene Real-Time Transfer Control Protocol (RTCP)-Sitzungen pro Medienfluss zwischen dem rufenden Teilnehmer (21) und dem gerufenen Teilnehmer (22) realisiert werden.

9. Verfahren nach einem der vorangehenden Ansprüche, wobei die erste Transportweiterleitungspfad-Netzentität (111) und/oder die zweite Transportweiterleitungspfad-Netzentität (112) als ein Breitbandnetz-Gateway, oder als Teil eines Breitbandnetz-Gateways, oder mittels eines programmierbaren Breitbandnetz-Switches, insbesondere als Teil eines Vermittlungsstellen-Übergabepunktes oder als Teil eines Daten-Centers, realisiert oder implementiert werden.

10. Telekommunikationsnetz (100) zum Realisieren von Voice-over-IP-Kommunikationssitzungen zwischen einem rufenden Teilnehmer (21) und einem gerufenen Teilnehmer (22), wobei das Telekommunikationsnetz (100) ein Zugangs- und/oder Aggregationsnetz (110) und ein Internetprotokoll-Backbone-Netz (120) umfasst, wobei jede Voice-over-IP-Kommunikationssitzung eine Signalisierungssitzung (140) und eine Medienflusssitzung (150) umfasst, wobei sowohl die Signalisierungssitzung (140) als auch die Medienflusssitzung (150) über eine erste Transportweiterleitungspfad-Netzentität (111) und eine zweite Transportweiterleitungspfad-Netzentität (112) geroutet werden, wobei sowohl die Signalisierungssitzung (140) als auch die Medienflusssitzung (150) über eine erste Transportweiterleitungspfad-Netzentität (111) und eine zweite Transportweiterleitungspfad-Netzentität (112) geleitet werden, wobei der rufende Teilnehmer (21) einer ersten Proxy-Rufzustandssteuerungsfunktionsentität oder -funktionalität (131) zugewiesen oder damit verknüpft ist und der gerufene Teilnehmer (22) einer zweiten Proxy-Rufzustandssteuerungsfunktionsentität oder -funktionalität (132) zugewiesen oder damit verknüpft ist, und wobei die Medienflusssitzung (150) einen ersten Medienfluss (151) in der Richtung von dem rufenden Teilnehmer (21) zu dem gerufenen Teilnehmer (22) sowie einen zweiten Medienfluss (152) in der Richtung von dem gerufenen Teilnehmer (22) zu dem rufenden Teilnehmer (21) umfasst, wobei das Telekommunikationsnetz (100) so konfiguriert ist, dass:
- die Medienflusssitzung (150) der Voice-over-IP-Kommunikationssitzung durch Senden oder Austauschen einer Sitzungsbeschreibungsprotokoll-Angebotsnachricht (145, 145') und einer Sitzungsbeschreibungsprotokoll-Antwortnachricht (146, 146') zwischen der ersten und der zweiten Proxy-Rufzustandssteuerungsfunktionsentität oder -funktionalität (131, 132) als Teil der Signalisierungssitzung (140) initiiert wird,
wobei das Telekommunikationsnetz (100) so konfiguriert ist, dass der rufende Teilnehmer (21) die Sitzungsbeschreibungsprotokoll-Angebotsnachricht gemäß einer ersten Version (145) von ihr sendet, die als eine Endpunktadressinformation der, oder bezüglich der, Medienflusssitzung (150) die Adressinformation des rufenden Teilnehmers (21) umfasst, und wobei die erste Proxy-Rufzustandssteuerungsfunktionsentität oder -funktionalität (131) dafür konfiguriert ist, die Sitzungsbeschreibungsprotokoll-Angebotsnachricht gemäß einer zweiten Version (145') von ihr zu senden, die als eine Endpunktadressinformation der, oder bezüglich der, Medienflusssitzung (150) die Adressinformation der ersten Transportweiterleitungspfad-Netzentität (111) umfasst, und/oder
wobei das Telekommunikationsnetz (100) so konfiguriert ist, dass der gerufene Teilnehmer (22) die Sitzungsbeschreibungsprotokoll-Antwortnachricht gemäß einer ersten Version (146) von ihr sendet, die als eine Endpunktadressinformation der, oder bezüglich der, Medienflusssitzung (150) die Adressinformation des gerufenen Teilnehmers (22) umfasst, und wobei die zweite Proxy-Rufzustandssteuerungsfunktionsentität oder -funktionalität (132) dafür konfiguriert ist, die Sitzungsbeschreibungsprotokoll-Antwortnachricht gemäß einer zweiten Version (146') von ihr zu senden, die als eine Endpunktadressinformation der, oder bezüglich der, Medienflusssitzung (150) die Adressinformation der zweiten Transportweiterleitungspfad-Netzentität (112) umfasst, und
- die erste Transportweiterleitungspfad-Netzentität (111) durch eine erste softwaredefinierte Netz-Controller-Entität oder -Funktionalität (133) und unter Einbeziehung mindestens einer ersten Konfigurationsnachricht (155), die an die erste Transportweiterleitungspfad-Netzentität (111) gesendet wird, so konfiguriert wird, dass die erste Transportweiterleitungspfad-Netzentität (111) Modifikationen in Bezug auf Endpunktadressinformationen von Datenpaketen des ersten und/oder des zweiten Medienflusses (151, 152) Sitzung für Sitzung und in Abhängigkeit von mindestens einem Teil des Inhalts der Sitzungsbeschreibungsprotokoll-Angebotsnachricht (145, 145') und der Sitzungsbeschreibungsprotokoll-Antwortnachricht (146, 146') implementiert.

11. Proxy-Rufzustandssteuerungsfunktionsentität oder -funktionalität (131, 132) eines Telekommunikationsnetzes (100) nach Anspruch 10 oder zum Realisieren von Voice-over-IP-Kommunikationssitzungen zwischen einem rufenden Teilnehmer (21) und einem gerufenen Teilnehmer (22) unter Verwendung des Telekommunikationsnetzes (100), das ein Zugangs- und/oder Aggregationsnetz (110) und ein Internetprotokoll-Backbone-Netz (120) umfasst, wobei sowohl die Signalisierungssitzung (140) als auch die Medienflusssitzung (150) über eine erste Transportweiterleitungspfad-Netzentität (111) und eine zweite Transportweiterleitungspfad-Netzentität (112) geroutet werden, wobei sowohl die Signalisierungssitzung (140) als auch die Medienflusssitzung (150) über eine erste Transportweiterleitungspfad-Netzentität (111) und eine zweite Transportweiterleitungspfad-Netzentität (112) geleitet werden, wobei der rufende Teilnehmer (21) einer ersten Proxy-Rufzustandssteuerungsfunktionsentität oder -funktionalität (131) zugewiesen oder damit verknüpft ist und der gerufene Teilnehmer (22) einer zweiten Proxy-Rufzustandssteuerungsfunktionsentität oder -funktionalität (132) zugewiesen oder damit verknüpft ist, und wobei die Medienflusssitzung (150) einen ersten Medienfluss (151) in der Richtung von dem rufenden Teilnehmer (21) zu dem gerufenen Teilnehmer (22) sowie einen zweiten Medienfluss (152) in der Richtung von dem gerufenen Teilnehmer (22) zu dem rufenden Teilnehmer (21) umfasst, wobei die Transportweiterleitungspfad-Netzentität (111, 112), die Proxy-Rufzustandssteuerungsfunktionsentität oder -funktionalität (131, 132) und/oder die softwaredefinierte Netzentität oder -funktionalität (133, 134) so konfiguriert ist bzw. sind, dass:
- die Medienflusssitzung (150) der Voice-over-IP-Kommunikationssitzung durch Senden oder Austauschen einer Sitzungsbeschreibungsprotokoll-Angebotsnachricht (145, 145') und einer Sitzungsbeschreibungsprotokoll-Antwortnachricht (146, 146') zwischen der ersten und der zweiten Proxy-Rufzustandssteuerungsfunktionsentität oder -funktionalität (131, 132) als Teil der Signalisierungssitzung (140) initiiert wird,
wobei der rufende Teilnehmer (21) die Sitzungsbeschreibungsprotokoll-Angebotsnachricht gemäß einer ersten Version (145) von ihr sendet, die als eine Endpunktadressinformation der, oder bezüglich der, Medienflusssitzung (150) die Adressinformation des rufenden Teilnehmers (21) umfasst, und wobei die erste Proxy-Rufzustandssteuerungsfunktionsentität oder -funktionalität (131) dafür konfiguriert ist, die Sitzungsbeschreibungsprotokoll-Angebotsnachricht gemäß einer zweiten Version (145') von ihr zu senden, die als eine Endpunktadressinformation der, oder bezüglich der, Medienflusssitzung (150) die Adressinformation der ersten Transportweiterleitungspfad-Netzentität (111) umfasst, und/oder
wobei der gerufene Teilnehmer (22) die Sitzungsbeschreibungsprotokoll-Antwortnachricht gemäß einer ersten Version (146) von ihr sendet, die als eine Endpunktadressinformation der, oder bezüglich der, Medienflusssitzung (150) die Adressinformation des gerufenen Teilnehmers (22) umfasst, und wobei die zweite Proxy-Rufzustandssteuerungsfunktionsentität oder -funktionalität (132) dafür konfiguriert ist, die Sitzungsbeschreibungsprotokoll-Antwortnachricht gemäß einer zweiten Version (146') von ihr zu senden, die als eine Endpunktadressinformation der, oder bezüglich der, Medienflusssitzung (150) die Adressinformation der zweiten Transportweiterleitungspfad-Netzentität (112) umfasst, und
- die erste Transportweiterleitungspfad-Netzentität (111) durch eine erste softwaredefinierte Netz-Controller-Entität oder -Funktionalität (133) und unter Einbeziehung mindestens einer ersten Konfigurationsnachricht (155), die an die erste Transportweiterleitungspfad-Netzentität (111) gesendet wird, so konfiguriert wird, dass die erste Transportweiterleitungspfad-Netzentität (111) Modifikationen in Bezug auf Endpunktadressinformationen von Datenpaketen des ersten und/oder des zweiten Medienflusses (151, 152) Sitzung für Sitzung und in Abhängigkeit von mindestens einem Teil des Inhalts der Sitzungsbeschreibungsprotokoll-Angebotsnachricht (145, 145') und der Sitzungsbeschreibungsprotokoll-Antwortnachricht (146, 146') implementiert.

12. Programm, umfassend einen computerlesbaren Programmcode, der, wenn er auf einem Computer und/oder in einer Transportweiterleitungspfad-Netzentität (111, 112) und/oder in einer Proxy-Rufzustandssteuerungsfunktionsentität oder -funktionalität (131, 132) und/oder in einer softwaredefinierten Netzentität oder -funktionalität (133, 134) und/oder in einem Netzknoten des Telekommunikationsnetzes (100) oder teilweise in einer Transportweiterleitungspfad-Netzentität (111, 112) und/oder teilweise in einer Proxy-Rufzustandssteuerungsfunktionsentität oder -funktionalität (131, 132) und/oder teilweise in einer softwaredefinierten Netzentität oder -funktionalität (133, 134) und/oder teilweise in einem Netzknoten des Telekommunikationsnetzes (100) ausgeführt wird, den Computer und/oder die Transportweiterleitungspfad-Netzentitäten (111, 112) und/oder die Proxy-Rufzustandssteuerungsfunktionsentität oder -funktionalität (131, 132) und/oder die softwaredefinierte Netzentität oder -funktionalität (133, 134) und/oder den Netzknoten des Telekommunikationsnetzes (100) veranlasst, ein Verfahren nach einem der Ansprüche 1 bis 10 durchführen.

13. Computerlesbares Medium, umfassend Instruktionen, die, wenn sie auf einem Computer und/oder in einer Transportweiterleitungspfad-Netzentität (111, 112) und/oder in einer Proxy-Rufzustandssteuerungsfunktionsentität oder -funktionalität (131, 132) und/oder in einer softwaredefinierten Netzentität oder -funktionalität (133, 134) und/oder in einem Netzknoten des Telekommunikationsnetzes (100) oder teilweise in einer Transportweiterleitungspfad-Netzentität (111, 112) und/oder teilweise in einer Proxy-Rufzustandssteuerungsfunktionsentität oder -funktionalität (131, 132) und/oder teilweise in einer softwaredefinierten Netzentität oder -funktionalität (133, 134) und/oder teilweise in einem Netzknoten des Telekommunikationsnetzes (100) ausgeführt werden, den Computer und/oder die Transportweiterleitungspfad-Netzentitäten (111, 112) und/oder die Proxy-Rufzustandssteuerungsfunktionsentität oder -funktionalität (131, 132) und/oder die softwaredefinierte Netzentität oder -funktionalität (133, 134) und/oder den Netzknoten des Telekommunikationsnetzes (100) veranlassen, ein Verfahren nach einem der Ansprüche 1 bis 10 durchführen.

## Revendications

1. Procédé pour réaliser des sessions de communication Voix sur IP entre un appelant (21) et un appelé (22) à l'aide d'un réseau de télécommunications (100) comprenant un réseau d'accès et/ou d'agrégation (110) et un réseau fédérateur de protocole Internet (120), dans lequel chaque session de communication voix sur IP comprend une session de signalisation (140) et une session de flux média (150), dans lequel la session de signalisation (140) et la session de flux média (150) sont toutes deux acheminées par l'intermédiaire d'une première entité de réseau de chemin d'acheminement de transport (111) et d'une seconde entité de réseau de chemin d'acheminement de transport (112), l'appelant (21) étant associé ou affecté à une première entité ou fonctionnalité de fonction de commande d'état d'appel proxy (131) et l'appelé (22) étant associé ou affecté à une seconde entité ou fonctionnalité de fonction de commande d'état d'appel proxy (132), et la session de flux média (150) comprenant un premier flux média (151) dans la direction allant de l'appelant (21) vers l'appelé (22) ainsi qu'un second flux média (152) dans la direction allant de l'appelé (22) vers l'appelant (21), le procédé comprenant les étapes suivantes :
- dans une première étape, la session de flux média (150) de la session de communication voix sur IP est initiée au moyen de la transmission ou de l'échange d'un message d'offre de protocole de description de session (145, 145') et d'un message de réponse de protocole de description de session (146, 146') entre la première et la seconde entité ou fonctionnalité de fonction de commande d'état d'appel proxy (131, 132) dans le cadre de la session de signalisation (140), et
- dans une seconde étape, après ou pendant la première étape, la première entité de réseau de chemin d'acheminement de transport (111) est configurée, par une première entité ou fonctionnalité de contrôleur de réseau défini par logiciel (133), et impliquant au moins un premier message de configuration (155) transmis à la première entité de réseau de chemin d'acheminement de transport (111), de sorte que la première entité de réseau de chemin de transfert de transport (111) met en œuvre des modifications concernant des informations d'adresse de point d'extrémité de paquets de données du premier et/ou du second flux média (151, 152) sur une base de session par session et en fonction d'au moins une partie du contenu du message d'offre de protocole de description de session (145, 145') et du message de réponse de protocole de description de session (146, 146'),
dans lequel, au cours de la première étape, l'appelant (21) transmet le message d'offre de protocole de description de session conformément à une première version (145) de celui-ci, comprenant, en tant qu'informations d'adresse de point d'extrémité de la session de flux média (150) ou concernant celle-ci, les informations d'adresse de l'appelant (21), et dans lequel la première entité ou fonctionnalité de fonction de commande d'état d'appel proxy (131) transmet le message d'offre de protocole de description de session conformément à une seconde version version (145') de celui-ci, comprenant, en tant qu'informations d'adresse de point d'extrémité de la session de flux média (150) ou concernant celle-ci, les informations d'adresse de la première entité de réseau de chemin d'acheminement de transport (111), et/ou dans lequel, au cours de la première étape, l'appelé (22) transmet le message de réponse du protocole de description de session conformément à une première version (146) de celui-ci, comprenant, en tant qu'informations d'adresse de point d'extrémité de la session de flux média (150) ou concernant celle-ci, les informations d'adresse de l'appelé (22), et dans lequel la seconde entité ou fonctionnalité de fonction de commande d'état d'appel proxy (132) transmet le message de réponse de protocole de description de session conformément à une seconde version (146') de celui-ci, comprenant, en tant qu'informations d'adresse de point d'extrémité de la session de flux média (150) ou concernant celle-ci, les informations d'adresse de la seconde entité de réseau de chemin d'acheminement de transport (112).

2. Procédé selon la revendication 1, dans lequel, au cours de la seconde étape, la seconde entité de réseau de chemin d'acheminement de transport (112) est également configurée au moyen de l'utilisation de la première entité ou fonctionnalité de réseau défini par logiciel (133) ou d'une seconde entité ou fonctionnalité de réseau défini par logiciel (134), et impliquant au moins un second message de configuration (156) transmis à la seconde entité de réseau de chemin d'acheminement de transport (112), de telle sorte que la seconde entité de réseau de chemin d'acheminement de transport (112) met en œuvre des modifications concernant des paquets de données du premier et/ou du second flux média (151, 152) sur une base de session par session et en fonction d'au moins une partie du contenu du message d'offre de protocole de description de session (145, 145') et du message de réponse de protocole de description de session (146, 146').

3. Procédé selon l'une des revendications précédentes, dans lequel
- au moyen de sa configuration due à l'au moins un premier message de configuration (155), la première entité de réseau de chemin d'acheminement de transport (111) réalise et/ou
- au moyen de sa configuration due à l'au moins un second message de configuration (156), la seconde entité de réseau de chemin d'acheminement de transport (112) réalise au moins l'un parmi :
- la sélection du trafic sur IPv4 ou IPv6
- la sécurité, en particulier le chiffrement, du flux média envoyé vers l'appelant (21) et/ou l'appelé (22),
- le camouflage de topologie pour IPv4 et/ou IPv6,
- le pontage entre IPv4 et IPv6 ou entre IPv6 et IPv4,
- le chemin de média optimal,
- le type de service et/ou la qualité de service,
- l'aide à la traversée de la traduction d'adresse de réseau.

4. Procédé selon l'une des revendications précédentes, dans lequel la première entité ou fonctionnalité de réseau défini par logiciel (133), sur la base d'au moins un message de commande reçu de la première entité ou fonctionnalité de fonction de commande d'état d'appel proxy (131), transmet au moins un premier message de configuration (155) à la première entité de réseau de chemin d'acheminement de transport (111) de sorte que la première entité de réseau de chemin d'acheminement de transport (111) met en oeuvre les modifications respectives concernant des paquets de données du premier et/ou du second flux média (151, 152), en particulier des modifications de l'en-tête de protocole Internet de ces paquets de données, en fonction d'au moins une partie du contenu du message d'offre de protocole de description de session (145, 145') et du message de réponse de protocole de description de session (146, 146'),
dans lequel, en particulier, concernant le premier flux média (151), une première configuration de source de protocole Internet (161) est utilisée, et, concernant le second flux média (152), une seconde configuration de destination de protocole Internet (165) est utilisée,
la première configuration de source de protocole Internet et la seconde configuration de destination de protocole Internet (161, 165) de la première passerelle d'accès à large bande (111) étant des configurations de protocole Internet définissant la première entité de réseau de chemin d'acheminement de transport (111) comme point d'extrémité de la session de flux média (150) permettant de réaliser un camouflage de topologie par rapport à la seconde passerelle d'accès à large bande (112).

5. Procédé selon l'une des revendications précédentes, dans lequel la seconde entité ou fonctionnalité de réseau défini par logiciel (134), sur la base d'au moins un autre message de commande reçu de la seconde entité ou fonctionnalité de fonction de commande d'état d'appel proxy (132), transmet au moins un second message de configuration (156) à la seconde entité de réseau de chemin d'acheminement de transport (112) de sorte que la seconde entité de réseau de chemin d'acheminement de transport (112) met en oeuvre les modifications respectives concernant des paquets de données du premier et/ou du second flux média (151, 152), en particulier des modifications de l'en-tête de protocole Internet de ces paquets de données, en fonction d'au moins une partie du contenu du message d'offre de protocole de description de session (145, 145') et du message de réponse de protocole de description de session (146, 146'),
dans lequel, en particulier, concernant le second flux média (152), une seconde configuration de source de protocole Internet (164) est utilisée, et, concernant le premier flux média (151), une première configuration de destination de protocole Internet (162) est utilisée,
la seconde configuration de source de protocole Internet et la première configuration de destination de protocole Internet (162, 164) de la seconde entité de réseau de chemin d'acheminement de transport (112) étant des configurations de protocole Internet définissant la seconde entité de réseau de chemin d'acheminement de transport (112) comme point d'extrémité de la session de flux média (150) permettant de réaliser un camouflage de topologie par rapport à la première entité de réseau de chemin d'acheminement de transport (111).

6. Procédé selon l'une des revendications précédentes, dans lequel la première entité de réseau de chemin d'acheminement de transport (111) correspond à une entité spécifiquement affectée à l'appelant (21) et la première entité ou fonctionnalité de réseau défini par logiciel (133), sur la base de l'au moins un message de commande reçu de la première entité ou fonctionnalité de fonction de commande d'état d'appel proxy (131), détermine la première entité de réseau de chemin d'acheminement de transport (111) correspondant à l'appelant (21) et/ou, dans lequel la seconde entité de réseau de chemin d'acheminement de transport (112) correspond à une entité spécifiquement affectée à l'appelé (22) et la seconde entité ou fonctionnalité de réseau défini par logiciel (134), sur la base de l'au moins un message de commande reçu de la seconde entité ou fonctionnalité de fonction de commande d'état d'appel proxy (132), détermine la seconde entité de réseau de chemin d'acheminement de transport (112) correspondant à l'appelé (22).

7. Procédé selon l'une des revendications précédentes, dans lequel le message de commande et/ou l'autre message de commande concernent en particulier des messages conformes à un protocole de commande de passerelle média, MGCP, tel que le protocole H.248, le protocole de commande de passerelle Megaco, et/ou
dans lequel le premier et/ou le second message de configuration se rapportent à des messages d'un protocole de signalisation entre le contrôleur de réseau défini par logiciel et l'élément de réseau commandé, tel que le protocole de communication Openflow,
dans lequel les première et seconde configurations de source et de destination de protocole Internet (161, 162, 164, 165), respectivement, comprennent ou se rapportent à des informations d'adresse de protocole Internet et à des informations de port de protocole Internet.

8. Procédé selon l'une des revendications précédentes, dans lequel, en ce qui concerne le premier flux média (151) et/ou en ce qui concerne le second flux média (152), la première entité de réseau de chemin d'acheminement de transport (111) et/ou la seconde entité de réseau de chemin d'acheminement de transport (112) réalisent une fonctionnalité de traduction d'adresse de réseau, dans lequel, en particulier, en ce qui concerne à la fois le premier flux média (151) et le second flux média (152), seules la première entité de réseau de chemin d'acheminement de transport (111) et/ou la seconde entité de réseau de chemin d'acheminement de transport (112) réalisent une fonctionnalité de traduction d'adresse de réseau, dans lequel, en particulier, au maximum trois sessions RTP, sessions de protocole de transfert en temps réel, différentes (151', 151", 151'", 152', 152", 152'"), et/ou trois sessions RTCP, sessions de protocole de commande de transfert en temps réel, différentes, sont réalisées, par flux média, entre l'appelant (21) et l'appelé (22).

9. Procédé selon l'une des revendications précédentes, dans lequel la première entité de réseau de chemin d'acheminement de transport (111) et/ou la seconde entité de réseau de chemin d'acheminement de transport (112) sont réalisées ou mises en oeuvre en tant que partie d'une passerelle de réseau à large bande ou au moyen d'un commutateur de réseau à large bande programmable, en particulier en tant que partie d'un point de livraison de centre de commutation ou en tant que partie d'un centre de données.

10. Réseau de télécommunications (10) pour réaliser des sessions de communication Voix sur IP entre un appelant (21) et un appelé (22), le réseau de télécommunications (100) comprenant un réseau d'accès et/ou d'agrégation (110) et un réseau fédérateur de protocole Internet (120), dans lequel chaque session de communication voix sur IP comprend une session de signalisation (140) et une session de flux média (150), dans lequel la session de signalisation (140) et la session de flux média (150) sont toutes deux acheminées par l'intermédiaire d'une première entité de réseau de chemin d'acheminement de transport (111) et d'une seconde entité de réseau de chemin d'acheminement de transport (112), l'appelant (21) étant associé ou affecté à une première entité ou fonctionnalité de fonction de commande d'état d'appel proxy (131) et l'appelé (22) étant associé ou affecté à une seconde entité ou fonctionnalité de fonction de commande d'état d'appel proxy (132), et la session de flux média (150) comprenant un premier flux média (151) dans la direction allant de l'appelant (21) vers l'appelé (22) ainsi qu'un second flux média (152) dans la direction allant de l'appelé (22) vers l'appelant (21), dans lequel le réseau de télécommunications (100) est configuré de telle sorte que :
- la session de flux média (150) de la session de communication voix sur IP est initiée au moyen de la transmission ou de l'échange d'un message d'offre de protocole de description de session (145, 145') et d'un message de réponse de protocole de description de session (146, 146') entre la première et la seconde entité ou fonctionnalité de fonction de commande d'état d'appel proxy (131, 132) dans le cadre de la session de signalisation (140),
dans lequel le réseau de télécommunications (100) est configuré de telle sorte que l'appelant (21) transmet le message d'offre de protocole de description de session conformément à une première version (145) de celui-ci, comprenant, en tant qu'informations d'adresse de point d'extrémité de la session de flux média (150) ou concernant celle-ci, les informations d'adresse de l'appelant (21), et dans lequel la première entité ou fonctionnalité de fonction de commande d'état d'appel proxy (131) est configurée pour transmettre le message d'offre de protocole de description de session conformément à une seconde version (145') de celui-ci, comprenant, en tant qu'informations d'adresse de point d'extrémité de la session de flux média (150) ou concernant celle-ci, les informations d'adresse de la première entité de réseau de chemin d'acheminement de transport (111), et/ou
dans lequel le réseau de télécommunications (100) est configuré de telle sorte que l'appelé (22) transmet le message de réponse de protocole de description de session conformément à une première version (146) de celui-ci, comprenant, en tant qu'informations d'adresse de point d'extrémité de la session de flux média (150) ou concernant celle-ci, les informations d'adresse de l'appelé (22), et dans lequel la seconde entité ou fonctionnalité de fonction de commande d'état d'appel proxy (132) est configurée pour transmettre le message de réponse de protocole de description de session conformément à une seconde version (146') de celui-ci, comprenant, en tant qu'informations d'adresse de point d'extrémité de la session de flux média (150) ou concernant celle-ci, les informations d'adresse de la seconde entité de réseau de chemin d'acheminement de transport (112), et/ou
- la première entité de réseau de chemin d'acheminement de transport (111) est configurée, par une première entité ou fonctionnalité de contrôleur de réseau défini par logiciel (133), et impliquant au moins un premier message de configuration (155) transmis à la première entité de réseau de chemin d'acheminement de transport (111), de sorte que la première entité de réseau de chemin d'acheminement de transport (111) met en oeuvre des modifications concernant des informations d'adresse de point d'extrémité de paquets de données du premier et/ou du second flux média (151, 152) sur une base de session par session et en fonction d'au moins une partie du contenu du message d'offre de protocole de description de session (145, 145') et du message de réponse de protocole de description de session (146, 146').

11. Entité ou fonctionnalité de fonction de commande d'état d'appel proxy (131, 132) d'un réseau de télécommunications (100) selon la revendication 10 ou pour réaliser des sessions de communication Voix sur IP entre un appelant (21) et un appelé (22) à l'aide du réseau de télécommunications (100) comprenant un réseau d'accès et/ou d'agrégation (110) et un réseau fédérateur de protocole Internet (120), dans lequel chaque session de communication voix sur IP comprend une session de signalisation (140) et une session de flux média (150), dans lequel la session de signalisation (140) et la session de flux média (150) sont toutes deux acheminées par l'intermédiaire d'une première entité de réseau de chemin d'acheminement de transport (111) et d'une seconde entité de réseau de chemin d'acheminement de transport (112), l'appelant (21) étant associé ou affecté à une première entité ou fonctionnalité de fonction de commande d'état d'appel proxy (131) et l'appelé (22) étant associé ou affecté à une seconde entité ou fonctionnalité de fonction de commande d'état d'appel proxy (132), et la session de flux média (150) comprenant un premier flux média (151) dans la direction allant de l'appelant (21) vers l'appelé (22) ainsi qu'un second flux média (152) dans la direction allant de l'appelé (22) vers l'appelant (21), dans lequel l'entité de réseau de chemin d'acheminement de transport (111, 112), l'entité ou la fonctionnalité de fonction de commande d'état d'appel proxy (131, 132), et/ou l'entité ou la fonctionnalité de réseau défini par logiciel (133, 134) est ou sont configurées de telle sorte que :
- la session de flux média (150) de la session de communication voix sur IP est initiée au moyen de la transmission ou de l'échange d'un message d'offre de protocole de description de session (145, 145') et d'un message de réponse de protocole de description de session (146, 146') entre la première et la seconde entité ou fonctionnalité de fonction de commande d'état d'appel proxy (131, 132) dans le cadre de la session de signalisation (140),
dans lequel l'appelant (21) transmet le message d'offre de protocole de description de session conformément à une première version (145) de celui-ci, comprenant, en tant qu'informations d'adresse de point d'extrémité de la session de flux média (150) ou concernant celle-ci, les informations d'adresse de l'appelant (21), et dans lequel la première entité ou fonctionnalité de fonction de commande d'état d'appel proxy (131) est configurée pour transmettre le message d'offre de protocole de description de session conformément à une seconde version (145') de celui-ci, comprenant, en tant qu'informations d'adresse de point d'extrémité de la session de flux média (150) ou concernant celle-ci, les informations d'adresse de la première entité de réseau de chemin d'acheminement de transport (111), et/ou dans lequel l'appelé (22) transmet le message de réponse du protocole de description de session conformément à une première version (146) de celui-ci, comprenant, en tant qu'informations d'adresse de point d'extrémité de la session de flux média (150) ou concernant celle-ci, les informations d'adresse de l'appelé (22), et
dans lequel la seconde entité ou fonctionnalité de fonction de commande d'état d'appel proxy (132) est configurée pour transmettre le message de réponse de protocole de description de session conformément à une seconde version (146') de celui-ci, comprenant, en tant qu'informations d'adresse de point d'extrémité de la session de flux média (150) ou concernant celle-ci, les informations d'adresse de la seconde entité de réseau de chemin d'acheminement de transport (112), et
- la première entité de réseau de chemin d'acheminement de transport (111) est configurée, par une première entité ou fonctionnalité de contrôleur de réseau défini par logiciel (133), et impliquant au moins un premier message de configuration (155) transmis à la première entité de réseau de chemin d'acheminement de transport (111), de sorte que la première entité de réseau de chemin d'acheminement de transport (111) met en oeuvre des modifications concernant des informations d'adresse de point d'extrémité de paquets de données du premier et/ou du second flux média (151, 152) sur une base de session par session et en fonction d'au moins une partie du contenu du message d'offre de protocole de description de session (145, 145') et du message de réponse de protocole de description de session (146, 146').

12. Programme comprenant un code de programme lisible par ordinateur qui, lorsqu'il est exécuté sur un ordinateur et/ou sur des entités de réseau de chemin d'acheminement de transport (111, 112) et/ou sur une entité ou fonctionnalité de fonction de commande d'état d'appel proxy (131, 132) et/ou sur une entité ou fonctionnalité de réseau défini par logiciel (133, 134) et/ou sur un noeud de réseau du réseau de télécommunication (100), ou en partie sur des entités de réseau de chemin d'acheminement de transport (111, 112) et/ou en partie sur une entité ou une fonctionnalité de fonction de commande d'état d'appel proxy (131, 132) et/ou en partie sur une entité ou une fonctionnalité de réseau défini par logiciel (133, 134) et/ou en partie sur un noeud de réseau du réseau de télécommunications (100), amène l'ordinateur et/ou les entités de réseau de chemin d'acheminement de transport (111, 112) et/ou l'entité ou la fonctionnalité de fonction de commande d'état d'appel proxy (131, 132) et/ou l'entité ou la fonctionnalité de réseau défini par logiciel (133, 134) et/ou le noeud de réseau du réseau de télécommunications (100) à exécuter un procédé selon l'une des revendications 1 à 10.

13. Support lisible par ordinateur comprenant des instructions qui, lorsqu'elles sont exécutées sur un ordinateur et/ou sur des entités de réseau de chemin d'acheminement de transport (111, 112) et/ou sur une entité ou fonctionnalité de fonction de commande d'état d'appel proxy (131, 132) et/ou sur une entité ou fonctionnalité de réseau défini par logiciel (133, 134) et/ou sur un noeud de réseau du réseau de télécommunication (100), ou en partie sur des entités de réseau de chemin d'acheminement de transport (111, 112) et/ou en partie sur une entité ou une fonctionnalité de fonction de commande d'état d'appel proxy (131, 132) et/ou en partie sur une entité ou une fonctionnalité de réseau défini par logiciel (133, 134) et/ou en partie sur un noeud de réseau du réseau de télécommunications (100), amènent l'ordinateur et/ou les entités de réseau de chemin d'acheminement de transport (111, 112) et/ou l'entité ou la fonctionnalité de fonction de commande d'état d'appel proxy (131, 132) et/ou l'entité ou la fonctionnalité de réseau défini par logiciel (133, 134) et/ou le noeud de réseau du réseau de télécommunications (100) à exécuter un procédé selon l'une des revendications 1 à 10.
